# EUROPÄISCHE PATENTSCHRIFT

(11) **EP 1 481 863 B1**
(45) Veröffentlichungstag und Bekanntmachung des Hinweises auf die Patenterteilung: **19.10.2011**
(21) Anmeldenummer: 04101651.0
(22) Anmeldetag: 21.04.2004
(51) Int. Cl.: B60T 8/40, B60T 8/42, B60T 8/48

(54) **Hydraulische Zweikreis-Fahrzeugbremsanlage**
hydraulic two circuit brake system for vehicles
Système hydraulique de freinage à deux circuits pour véhicules

(30) Priorität: 28.05.2003 DE 10324242
(43) Veröffentlichungstag der Anmeldung: 01.12.2004
(73) Patentinhaber: Bayerische Motoren Werke Aktiengesellschaft, 80809 München (DE)
(72) Erfinder: Unterforsthuber, Jakob, 82216 Maisach (DE)

(56) Entgegenhaltungen:
- WO-A-98/13241
- DE-A- 4 309 470
- DE-A- 19 541 381
- DE-A1- 4 213 740
- US-A1- 2002 180 262

## Beschreibung

Die Erfindung betrifft ein Verfahren zum fahrerunabhängigen Abbremsen eines Kraftfahrzeugs mittels eines Fahrerassistenzsystems, wobei das Fahrzeug mit einer hydraulischen Zweikreis-Bremsanlage ausgestattet ist, die einen zweikreisigen Hauptbremszylinder mit Bremsfluid-Reservoir und eine Blockierschutzeinrichtung aufweist, die Bremsdruckmodulationsventilanordnungen und je Bremskreis eine Rückförderpumpe besitzt, und mit einer automatischen Bremseinrichtungausgerüstet ist, die im Zusammenwirken mit der Blockierschutzeinrichtung und deren Rückförderpumpe die Fahrzeugbewegung fahrerunabhängig und radindividuell abbremsen und/oder stabilisieren kann, und die weiterhin mit einer elektromotorisch angetriebenen Hilfspumpe zum Fördern von Bremsfluid zu Einlassventilen der Radbremszylinder zumindest eines Bremskreises versehen ist, wobei der von der Hilfspumpe gelieferte Druck wesentlich unterhalb des mittels des Hauptbremszylinders maximal erzeugbaren Druckes jedoch oberhalb von 20 bar liegt. Zum Stand der Technik wird auf die DE 42 13 740 A1 verwiesen.

Moderne Bremsanlagen für Kraftfahrzeuge enthalten eine dem Fachmann auch unter der Bezeichnung ESP (oder auch DSC) bekannte Fahrdynamikregelung, die mit den für eine ebenfalls allgemein bekannte Blockierschutzregelung (ABS) bereits vorhandenen Bauelementen arbeitet. Diese Fahrdynamikregelung kann ein Fahrzeug bei Schleudergefahr durch gezielte Bremseneingriffe stabilisieren, wobei der fahrerunabhängige Bremsdruckaufbau von den genannten Rückförderpumpen, die ursprünglich nur für die Blockierschutzregelung vorgesehen waren, übernommen wird. Ein beispielsweise in der DE 42 13 740 A1 gezeigter Zwischen-Entwicklungsstand einer hydraulischen Fzg.-Bremsanlage mit Fahrdynamikregelung enthielt eine sog. Vorladepumpe, die die Dynamik des Druckaufbaus bei aktiver Fahrdynamikregelung vor allem bei Tieftemperaturen verbessern sollte. Die Vorladepumpe erzeugte einen Druck in der Größenordnung von wenigstens 20 bar und war auf ein großes Fördervolumen ausgelegt. Dadurch war sie in der Lage, den Füllbereich der jeweiligen Radbremszylinder schnell mit Bremsfluid zu befüllen. Den weiteren Druckaufbau im Bremsfluid bis hin zum geforderten Regeldruck in der Größenordnung von 70 bar bis 120 bar übernahm - ebenso wie in den derzeitigen Bremsanlagen, die ohne Vorladepumpe arbeiten - danach die besagte Rückförderpumpe.

Bekannt sind weiterhin sog. Fahrerassistenzsysteme, bspw. die Fahrgeschwindigkeitsregelung ACC, die einen autonomen, d.h. fahrerunabhängigen Bremseneingriff erfordern. Bekanntermaßen gibt hierbei der Fahrer des Fahrzeugs eine Wunsch-Fahrgeschwindigkeit vor, die das Fahrzeug unter Berücksichtigung des vorausfahrenden Verkehrs selbsttätig einzuhalten versucht. Bei Kolonnenverkehr müssen dann naturgemäß eine Vielzahl von Abbremsungen durchgeführt werden. Dabei sollte das Bremssystem in der Lage sein, selbsttätig eine bestimmte Verzögerung in der geforderten Dynamik und Qualität zu erzeugen, wobei hier an die Qualität wesentlich höhere Anforderungen gestellt werden als bei Eingriffen von Fahrdynamikreglern. Während letztere nämlich nur in Notfällen aktiv sind, erfolgen Bremseneingriffe von Fahrerassistenzsystemen in Alltagssituationen sehr häufig, weshalb der Fahrer hier deutlich höhere Ansprüche im Hinblick auf eine komfortable Abbremsung stellt als in wenigen Notsituationen.

Ein autonomer Bremseingriff eines Fahrerassistenzsystems kann gemäß dem bekannten Stand der Technik auf unterschiedliche Weise erfolgen. Zumeist wird die Fahrdynamikregelung bzw. das zugehörige System der Blockierschutzeinrichtung auch zum Aufbau von Bremsdruck für das Fahrerassistenzsystem genutzt, jedoch ist die bereits vorhandene Rückförderpumpe für gänzlich andere Anforderungen als bei einem autonomen Bremseneingriff ausgelegt. Diese Rückförderpumpe kann zwar hohe Drücke erzeugen, verfügt aber nur über eine geringe Dynamik, und besitzt eine schlechte Regelbarkeit im niedrigen Druckbereich. Der Druckaufbau erfolgt unstetig und bei üblicher Verschaltung an der Vorderachse und der Hinterachse des Kraftfahrzeugs in unterschiedlicher Höhe. Vorteilhaft bei diesem Konzept ist die Ansteuerung der Rückförderpumpe durch das die Fahrdynamikregelung übernehmende Steuergerät, so dass hierfür keine zusätzlichen Bauteile erforderlich sind. Diese Lösung kann also relativ kostengünstig umgesetzt werden.

Ein gewünschter dosierbarer autonomer, d.h. fahrerunabhängiger Bremseneingriff kann alternativ auch mittels eines regelbaren Unterdruckverstärkers erzeugt werden, jedoch ist dieser aufwändig und teuer. Er stellt gegenüber dem in millionenfacher Stückzahl produzierten Standard-Bremsgerät eine völlige Neuentwicklung dar. Der höhere Komplexitätsgrad wirkt sich nachteilig auf die Robustheit und die Zuverlässigkeit des Bremsgerätes aus. Ein Vorteil dieser Lösung ist die Eignung für sämtliche Anwendungsfälle eines autonomen Bremseneingriffs, so bspw. auch für die hohen Dynamik- und Verzögerungsanforderungen einer automatischen Geschwindigkeitsregelung mit Stop&Go-Funktion oder einer automatischen Unfallvermeidung.

Eine dritte Möglichkeit für einen autonomen Bremseneingriff eines Fahrerassistenzsystems stellen die sog. Brake-by-Wire-Systeme dar, von denen bisher nur das elektrohydraulische Prinzip in geringen Stückzahlen produziert wird. Ein solches sog. EHB-System ist extrem aufwändig, komplex und ungünstig hinsichtlich des erforderlichen Bauraumes und deutlich schwerer als die anderen genannten Fzg.-Bremsanlagen.

Hiermit soll nun ein Verfahren zum fahrerunabhängigen Abbremsen eines Kraftfahrzeugs mittels eines Fahrerassistenzsystems nach dem Oberbegriff des Anspruchs 1 aufgezeigt werden, mit welcher autonome Bremseneingriffe mit ausreichender Dynamik (insbesondere auch für eine Abbremsung bis zum Stillstand des Fahrzeugs) unter Gewährleistung einer hohen Qualität (insbesondere was den Bremsdruckaufbau betrifft) durchgeführt werden können ( = Aufgabe der vorliegenden Erfindung).

Die Lösung dieser Aufgabe ist **dadurch gekennzeichnet, dass** für übliche Fahrzeug-Verzögemngen nur mit der Hilfspumpe ausgehend von einem im wesentlichen drucklosen Zustand an die Radbremszylinder zumindest eines Bremskreises ein kontinuierlicher steigender Bremsfluiddruck bis hin zu einem Maximalwert in der Größenordnung von 25 bar bis 45 bar angelegt wird und dass erst zur Erzielung einer maximalen Fahrzeug-Verzögerung ein zusätzlicher Bremsdruckaufbau mittels der Rückförderpumpe erfolgt.

Erfindungsgemäß ist für einen fahrerunabhängigen Bremsdruckaufbau durch ein Fahrerassistenzsystem eine hierfür speziell konzipierte Hilfspumpe in einer ansonsten üblichen Zweikreis-Fahrzeugbremsanlage mit Blockierschutzeinrichtung sowie Fahrdynamikregelung, also in einer sog. ESP-Bremsanlage (oder auch DSC-Bremsanlage) vorgesehen. Diese Hilfspumpe soll in der Lage sein, ein Druckniveau in der Größenordnung von 25 bar bis 45 bar aufbauen zu können, um den vorliegenden Dynamikanforderungen gerecht zu werden, und somit auch ohne Zuschaltung der genannten Rückförderpumpe eine dynamische Abbremsung des Fahrzeugs bis hin zum Stillstand bewerkstelligen zu können. Ferner ist der diese Pumpe antreibende Elektromotor ausreichend regelbar, um ausgehend vom im wesentlichen drucklosen Zustand einen kontinuierlichen Bremsdruckaufbau umsetzen zu können, so dass eine ausreichend komfortable selbsttätige Abbremsung des Fahrzeugs durchgeführt werden kann.

Nach einer bevorzugten Ausführungsform versorgt diese Hilfspumpe lediglich Radbremszylinder an der Fahrzeug-Vorderachse und somit nur einen der Bremskreise, wodurch ein besonders einfacher Aufbau dieser Pumpe bspw. in Form einer Zahnradpumpe, möglich ist. Sobald ein autonomer Bremseneingriff durch das Fahrerassistenzsystem erforderlich ist, wird diese Hilfspumpe angesteuert, wobei in mehr als 99 % aller Fälle der von dieser aufgebaute Bremsfluiddruck für die geforderte Verzögerungsleistung ausreicht. Lediglich bei extremem Bedarf kann zusätzlich die bekannte Rückförderpumpe angesteuert werden, wobei vorteilhafterweise die Radbremszylinder bereits mit Bremsfluid befüllt sind, so dass auch mit der relativ geringen Förderleistung dieser Rückförderpumpe ein ausreichend steiler Druckgradient erzeugt werden kann. Im übrigen können dann zusätzlich auch noch die Radbremszylinder der Fzg.-Hinterachse mit Druck beaufschlagt werden, wodurch der mögliche Kraftschluss zwischen Reifen und Fahrbahn auch bei sehr hohen Reibwerten optimal genutzt werden kann.

Vorteilhafterweise ist die Geräuschentwicklung einer erfindungsgemäß ausgelegten Hilfspumpe im Betriebsfall wesentlich niedriger als diejenige der bekannten Rückförderpumpe(n), so dass in den meisten Fällen auch hierdurch eine Komfortsteigerung erreicht werden kann. In den sehr wenigen Betriebsfällen, in denen wie im vorhergehenden Absatz geschildert zusätzlich die Rückförderpumpe betrieben werden muss, so bspw. bei automatischen Bremsungen zur Unfallvermeidung, spielen die Geräuschentwicklung sowie der dann schlechtere Regelkomfort keine Rolle mehr.

Ziel der vorgeschlagenen Maßnahme ist es also, autonome Bremseneingriffe zu ermöglichen, die die Vorteile des weiter oben geschilderten ESP-Konzepts ausschöpfen, aber in der Leistung und der Qualität einem Booster-Konzept mit regelbarem Unterdruckverstärker oder einem Brake-By-Wire-System (bspw. in Form des o.g. EHB-Systems) entsprechen. Dieses Ziel wird dadurch erreicht, dass die beiden Basissysteme ESP (bzw. DSC) und Unterdruck-Bremskraftverstärkung unverändert beibehalten werden, und durch zumindest eine Zusatzkomponente ergänzt werden. Dies gewährleistet die von der Großserienverwendung her bekannten vorteilhaften Eigenschaften, nämlich Robustheit, Zuverlässigkeit und Wirtschaftlichkeit. Ein positiver Effekt ist weiterhin darin zu sehen, dass die erfindungsgemäß benötigte(n) Zusatzkomponente(n) nur in solchen Fahrzeugen verbaut werden muss oder müssen, welche mit der entsprechenden Zusatzfunktion ausgerüstet werden sollen. Eine erste derartige Zusatzkomponente ist die genannte Hilfspumpe mit den spezifizierten Eigenschaften.

Eine weitere sog. Zusatzkomponente, die eine vorteilhafte Weiterbildung des erfindungsgemäßen Verfahrens ermöglicht , kann in Form eines Volumenspeichers vorgesehen sein, der an eine sog. Kompensationsleitung angeschlossen ist, die von der vom Hauptbremszylinder zur Hilfspumpe führenden Bremsfluid-Leitung abzweigt und ein Schaltventil aufweist, welches geöffnet wird, wenn der Fahrer selbst den Hauptbremszylinder aktiviert und dabei an den Radbremszylindern bereits durch die Hilfspumpe ein Bremsfluiddruck angelegt ist, und wobei das Schaltventil im wesentlichen solange geöffnet bleibt, als der stromauf der geschlossenen Einlaßventile anliegende Bremsfluiddruck im wesentlichen gleich dem an den Radbremszylindern bereits anliegenden Bremsfluiddruck ist. Hiermit kann nämlich vermieden werden, dass der Fahrer des Fahrzeugs irritiert wird, wenn ein autonomer Bremseneingriff erfolgt und er gleichzeitig selbst die Bremse betätigt, d.h. durch einen Druck auf sein Bremspedal den Hauptbremszylinder aktiviert. Aufgrund des autonomen Bremseneingriffs sind nämlich die einzelnen Radbremsen bereits mit Bremsfluid befüllt, so dass der am Hauptbremszylinder auszuführende Weg und daher auch der entsprechende Bremspedalweg wesentlich kürzer sind als ohne eine derartige "VorBefüllung". Der Fahrer kann somit im Falle eines gleichzeitigen fahrerunabhängigen Bremseneingriffs ein deutlich verändertes Pedalgefühl empfinden.

Dieser beschriebene Effekt eines veränderten Pedalgefühls bei einer Fahrerbremsung während eines laufenden autonomen Bremseneingriffs kann nun durch einen ansteuerbaren Volumenspeicher ausgeglichen werden. Wenn das Bremspedal bei vorbefüllter Radbremsanlage bzw. bereits aktivierten Radbremszylindern betätigt wird, so öffnet das dem Volumenspeicher vorgeschaltete Schaltventil und lässt solange Bremsfluid, das unter dem vom Hauptbremszylinder aufgebrachten Druck steht, in den Volumenspeicher einströmen, bis der Bremsfluid-Druck stromauf sowie stromab der Einlassventile der Radbremszylinder im wesentlich gleich ist. Dann wird das besagte Schaltventil geschlossen und erst daraufhin werden die Einlassventile der Radbremszylinder geöffnet. Ab diesem Moment kann der Fahrer dann über den Hauptbremszylinder den Bremsdruck an den Radbremszylindern erhöhen. Um dabei bis zum Öffnungszeitpunkt der Einlassventile der Radbremszylinder ein dem üblichen Pedalgefühl identisches Gefühl zu erzeugen, kann die Druck-Volumen-Kennlinie der Radbremsanlage in dem genannten Volumenspeicher nachgebildet sein, jedoch ist dies nicht unbedingt erforderlich, da sich auch mit einem herkömmlichen, einfachen Niederdruckspeicher eine deutliche Verbesserung des Pedalgefühls erzielen lässt.

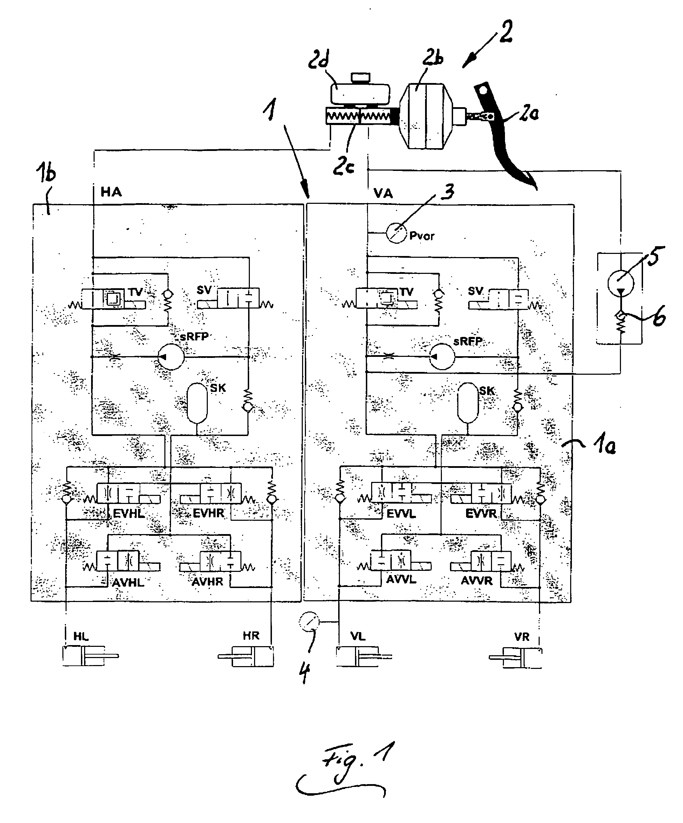

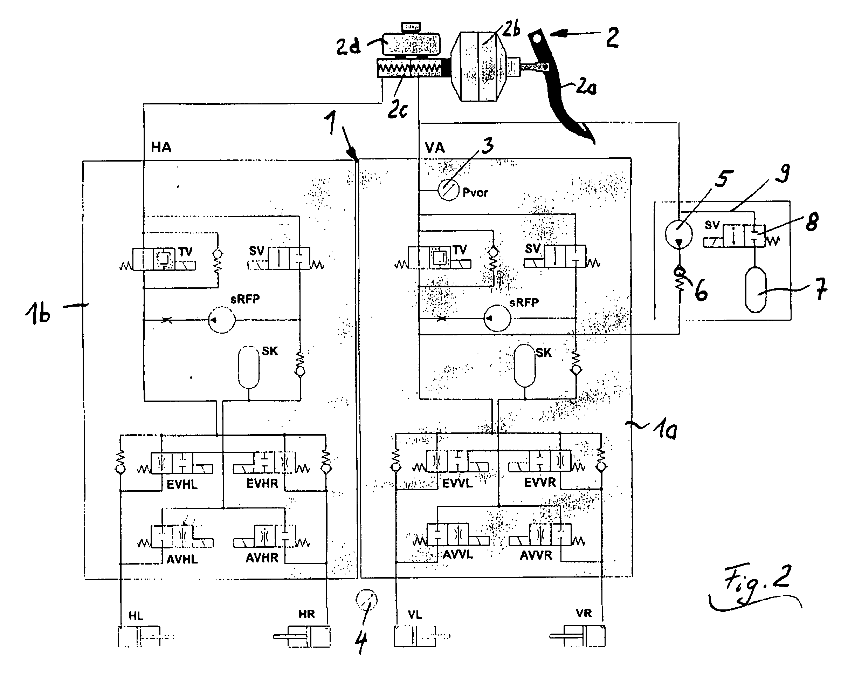

Die beiden beigefügten hydraulischen Schaltbilder **(****Fig.1****,** **Fig.2****)** zeigen hydraulische Zweikreis-Bremsanlagen für ein Fahrzeug, an denen das erfindungsgemäße Verfahren durchführbar ist, wobei jeweils mit der Bezugsziffer 1 ein übliches Hydroaggregat einer Zweikreis-Fahrzeugbremsanlage mit ESP-Funktion gekennzeichnet ist. Der Block 1a dieses Hydroaggregats ist dabei den beiden Radbremszylindern VL und VR der Fahrzeug-Vorderachse VA zugeordnet (und bildet den ersten Bremskreis), während der Block 1b des Hydroaggregats 1 den beiden Radbremszylindern HL und HR der Hinterachse HA zugeordnet ist und den zweiten Bremskreis bildet. Der Buchstabe L kennzeichnet dabei die linke Fahrzeugseite und der Buchstabe R die rechte Fahrzeugseite.

Den einzelnen Radbremszylindern VL, VR, HL, HR zugeordnete Einlassventile EV, über welche Bremsfluid gesteuert in die Radbremszylinder gelangen kann, sind dieser (üblichen) Nomenklatur folgend mit EVVL, EVVR, EVHL, EVHR bezeichnet. Gleiches gilt für zugeordnete Auslassventile AV, über die Bremsfluid gesteuert aus den einzelnen Radbremszylindern VL, VR, HL, HR abgeführt werden kann. In jedem Block 1a bzw. 1b des Hydroaggregats 1 sind neben einem Trennventil TV sowie einem Schaltventil SV insbesondere eine Rückförderpumpe sRFP vorgesehen sowie weitere bekannte Elemente wie Rückschlagventile, Drosseln und Speicher. All diese genannten und in der Anordnung vollkommen üblichen Elemente bilden eine Blockierschutzeinrichtung mit einer Bremsdruckmodulationsventilanordnung und können in Zusammenwirken mit einem figürlich nicht dargestellten geeigneten elektronischen Steuergerät eine automatische Bremseinrichtung bilden, die unter Zuhilfenahme der Rückförderpumpe(n) sRFP die Fahrzeugbewegung fahrerunabhängig und radindividuell abbremsen und/oder stabilisieren kann.

Mit der Bezugziffer 2 ist die ebenfalls übliche Bremsen-Betätigungseinheit für den Fahrer des Fahrzeugs in ihrer Gesamtheit bezeichnet, bestehend aus einem Bremspedal 2a, mit dem unter Zwischenschaltung eines Bremskraftverstärkers 2b ein zweikreisiger Hauptbremszylinder 2c betätigt wird, der aus einem Bremsfluid-Reservoir 2d gespeist wird. In einer Verbindungsleitung vom Hauptbremszylinder 2c zum ersten Bremskreis der Vorderachse VA ist ferner bei beiden Ausführungsbeispielen ein Drucksensor 3 vorgesehen. Beim Ausführungsbeispiel nach **Fig.2** ist ein weiterer Drucksensor 4 in der zum Radbremszylinder VL führenden Bremsfluid-Leitung vorgesehen.

Bei den hydraulische Zweikreis-Bremsanlagen nach den beiden **Figuren 1****,** **2** ist dem Block 1a des Hydroaggregats 1 und somit dem Bremskreis der Vorderachse VA eine Hilfspumpe 5 zugeordnet, die von einem nicht dargestellten Elektromotor angetrieben werden kann und stromab derer ein in Pumpen-Förderrichtung öffnendes Rückschlagventil 6 vorgesehen ist. Gespeist wird diese Hilfspumpe 5 aus dem dem Block 1a zugeordneten Teil des Hauptbremszylinders 2c bzw. direkt aus dem Reservoir 2d. Somit kann die Hilfspumpe 5 bei Betrieb einen Bremsfluidstrom unter Druck zu den Einlassventilen EVVL und EVVR der Radbremszylinder VL und VR fördern

Bereits erwähnt wurde ein figürlich nicht dargestelltes elektronisches Steuergerät, welches die stromlos offenen Einlassventile EV, die stromlos geschlossenen Auslassventile AV sowie die Rückförderpumpe sRFP im Bedarfsfall, d.h. zur Erzielung einer Blockierschutzfunktion sowie zur Fahrzeugstabilisierung in bekannter Weise geeignet ansteuert. Dieses oder ein anderes elektronisches Steuergerät kann nun auch den bereits genannten, die Hilfspumpe 5 antreibenden Elektromotor in geeigneter Weise ansteuern, wenn eine Abbremsung des Fahrzeugs seitens eines Fahrerassistenzsystems erforderlich ist. Dies sowie die Kriterien, welche die Hilfspumpe 5 sowie der zugehörige Elektromotor erfüllen sollen, wurde vor der Figurenbeschreibung bereits ausführlich erläutert.

Bei der hydraulische Zweikreis-Bremsanlage nach **Figur 2** ist zusätzlich zu der in **Figur 1** als erfindungswesentlichem Element dargestellten Hilfspumpe 5 ein Volumenspeicher 7 vorgesehen, dem ein Schaltventil 8 vorgelagert ist, und der über eine sog. Kompensationsleitung 9 mit dem sog. Hauptzylinderkreis der Vordderachse VA verbunden ist, d.h. die sog. Kompensationsleitung 9 zweigt von der vom Hauptbremszylinder 2c zur Hilfspumpe 5 führenden Hydraulik-Leitung ab. Auch die Funktion dieses Volumenspeichers 7 mit dem Schaltventil 8 wurde vor der Figurenbeschreibung bereits ausführlich erläutert, wobei für die dort erläuterte Abfrage, ob der Bremsfluid-Druck stromauf sowie stromab der Einlassventile EV der Radbremszylinder VL, VR im wesentlich gleich ist, auf die beiden Drucksensoren 3 und 4 zugegriffen werden kann.

## Patentansprüche

1. Verfahren zum fahrerunabhängigen Abbremsen eines Kraftfahrzeugs mittels eines Fahrerassistenzsystems, wobei das Fahrzeug mit einer hydraulischen Zweikreis-Bremsanlage ausgestattet ist, die einen zweikreisigen Hauptbremszylinder (2c) mit Bremsfluid-Reservoir (2d) und eine Blockierschutzeinrichtung aufweist, die Bremsdruckmodulationsventilanordnungen und je Bremskreis eine Rückförderpumpe (sRFP) besitzt, und mit einer automatischen Bremseinrichtungausgerüstet ist, die im Zusammenwirken mit der Blockierschutzeinrichtung und deren Rückförderpumpe die Fahrzeugbewegung fahrerunabhängig und radindividuell abbremsen und/oder stabilisieren kann, und die weiterhin mit einer elektromotorisch angetriebenen Hilfspumpe (5) zum Fördern von Bremsfluid zu Einlassventilen (EV) der Radbremszylinder (VL, VR) zumindest eines Bremskreises versehen ist, wobei der von der Hilfspumpe (5) gelieferte Druck wesentlich unterhalb des mittels des Hauptbremszylinders (2c) maximal erzeugbaren Druckes liegt,
**dadurch gekennzeichnet, dass** für übliche Fahrzeug-Verzögerungen nur mit der Hilfspumpe (5) ausgehend von einem im wesentlichen drucklosen Zustand an die Radbremszylinder (VL, VR) zumindest eines Bremskreises ein kontinuierlicher steigender Bremsfluiddruck bis hin zu einem Maximalwert in der Größenordnung von 25 bar bis 45 bar angelegt wird und dass erst zur Erzielung einer maximalen Fahrzeug-Verzögerung ein zusätzlicher Bremsdruckaufbau mittels der Rückförderpumpe erfolgt.

2. Verfahren nach Anspruch 1,
**dadurch gekennzeichnet, dass** ein Schaltventil (8), das in einer Kompensationsleitung (9) vorgesehen ist, die von einer vom Hauptbremszylinder (2c) zur Hilfspumpe (5) führenden Leitung abzweigt und zu einem Volumenspeicher (7) führt, geöffnet wird und hierdurch der Weg vom Hauptbremszylinder zum Volumenspeicher freigegeben wird, wenn an den Vorderachs-Radbremszylindern (VL, VR) bereits durch die Hilfspumpe (5) ein Bremsfluiddruck angelegt ist und der Fahrer den Hauptbremszylinder (2c) aktiviert, wobei das Schaltventil (8) im wesentlichen solange geöffnet bleibt, als der stromauf der geschlossenen Einlassventile (EV) anliegende Bremsfluiddruck im wesentlichen gleich dem an den Radbremszylindern (VL, VR) bereits anliegenden Bremsfluiddruck ist.

## Claims

1. A method for the driver-independent deceleration of a motor vehicle by means of a driver assistance system, wherein the vehicle is equipped with a hydraulic dual circuit brake system having a dual circuit main brake cylinder (2c) with a brake fluid reservoir (2d) and an anti-locking device, which has braking pressure modulation valve arrangements and a return pump (sRFP) for each braking circuit, and is equipped with an automatic braking device, which, in cooperation with the anti-locking device and its return pump, can decelerate and/or stabilise the vehicle movement independently of the driver and on an individual wheel basis, and which is furthermore provided with an auxiliary pump (5) driven by an electric motor to convey brake fluid to inlet valves (EV) of the wheel brake cylinders (VL, VR) of at least one braking circuit, the pressure supplied by the auxiliary pump (5) being substantially below the maximum pressure which can be generated by means of the main brake cylinder (2c), **characterised in that** for conventional vehicle decelerations, a continuously increasing brake fluid pressure up to a maximum value in the order of magnitude of 25 bar to 45 bar is applied to the wheel brake cylinders (VL, VR) of at least one braking circuit, only using the auxiliary pump (5), proceeding from a substantially pressureless state, and **in that** an additional braking pressure build-up by means of the return pump only takes place to achieve a maximum vehicle deceleration.

2. A method according to claim 1, **characterised in that** a switchover valve (8), which is provided in a compensation line (9), which branches off from a line leading from the main brake cylinder (2c) to the auxiliary pump (5) and leads to a volume store (7), is opened and the route from the main brake cylinder to the volume store is thereby cleared when a brake fluid pressure is already applied by the auxiliary pump (5) at the front axle wheel brake cylinders (VL, VR) and the driver activates the main brake cylinder (2c), wherein the switchover valve (8) remains open substantially as long as the brake fluid pressure applied upstream of the closed inlet valves (EV) is substantially equal to the brake fluid pressure already applied at the wheel brake cylinders (VL, VR).

## Revendications

1. Procédé de freinage d'un véhicule automobile indépendamment du conducteur à l'aide d'un système d'assistance de conduite,
le véhicule étant équipé :
- d'une installation de freinage hydraulique à deux circuits ayant un maître-cylindre de frein (2c) tandem équipé d'un réservoir de liquide de frein (2d) et d'une installation antiblocage, ayant des dispositifs de soupape de modulation de pression de frein et pour chaque circuit de frein, une pompe de refoulement (sRFP), et
- d'une installation de freinage automatique qui, en coopérant avec l'installation antiblocage et avec ses pompes de refoulement, freine et/ou stabilise le mouvement du véhicule indépendamment du conducteur et individuellement par roue et comporte aussi, une pompe auxiliaire (5) entraînée par un moteur électrique pour transférer du liquide de frein des soupapes d'entrée (EV) vers des cylindres de freins de roues (VL, VR) d'au moins un circuit de frein,
* la pression fournie par la pompe auxiliaire (5) étant significativement en dessous de la pression maximale que peut générer le maître cylindre de frein (2c),
procédé **caractérisé en ce que**
- pour les décélérations usuelles du véhicule, partant d'un état pratiquement sans pression des cylindres de freins de roues (VL, VR), d'au moins un circuit de frein, on applique par la pompe auxiliaire (5), une pression de liquide de frein croissant de manière continue jusqu'à une valeur maximale de l'ordre de grandeur de 25 bars à 45 bars, et
- ce n'est que pour générer la décélération maximale du véhicule, que l'on établit une pression de frein supplémentaire à l'aide de la pompe de refoulement.

2. Procédé selon la revendication 1,
**caractérisé en ce qu**'
on ouvre une soupape de commutation (8) est prévue dans une conduite de compensation (9) dérivée du maître-cylindre de frein (2c) vers la pompe auxiliaire (5) et conduisant à un réservoir volumique (7), et ainsi on libère le chemin entre le maître-cylindre de frein et le réservoir volumique si une pression de liquide de frein a déjà été appliquée par la pompe auxiliaire (5) aux cylindres de freins de roues (VL, VR) de l'essieu avant, et que le conducteur a activé le maître-cylindre de frein (2c),
* la soupape de commutation (8) restant pour l'essentiel ouverte aussi longtemps que la pression du liquide de frein appliquée en amont de la soupape d'entrée (EV), fermée, est pratiquement la même que la pression de liquide de frein déjà appliquée aux cylindres de freins de roues (VL, VR).
